(19) Europäisches Patentamt
European Patent Office
Office européen des brevets

(11) Numéro de publication: **0 220 080 B1**

# (12) FASCICULE DE BREVET EUROPEEN

(45) Date de publication du fascicule du brevet: **07.02.90**

(51) Int. Cl.[4]: **C08G 65/40**, C08G 65/48, C08G 73/06

(21) Numéro de dépôt: **86401935.1**

(22) Date de dépôt: **02.09.86**

(54) **Compositions d'oligomères de polyaryloxypyridine à terminaisons phtalonitriles, leur préparation, leur utilisation dans la fabrication de réseaux de polyaryloxypyridine copolyphtalocyanines, et les réseaux obtenus.**

(30) Priorité: **16.09.85 FR 8513793**

(43) Date de publication de la demande: **29.04.87 Bulletin 87/18**

(45) Mention de la délivrance du brevet: **07.02.90 Bulletin 90/6**

(84) Etats contractants désignés: **BE DE GB IT NL**

(56) Documents cités: **FR-A-1 527 714 US-A-4 259 471 US-A-4 409 382**

(73) Titulaire: **CENTRE D'ETUDE DES MATERIAUX ORGANIQUES POUR TECHNOLOGIES AVANCEES, Autoroute Lyon-Vienne Echangeur de Solaize Vernaison Solaize, F-69390 Vernaison(FR)**

(72) Inventeur: **Malinge, Jean, 6, Allée Ho Chi Minh, F-69700 Givors(FR)**
Inventeur: **Rabilloud, Guy, 27, Boulevard Clémenceau, F-38100 Grenoble(FR)**
Inventeur: **Sillion, Bernard, 93, rue Juliot Curie, F-69005 Lyon(FR)**

(74) Mandataire: **Colas des Francs, Jean et al, Institut Français du Pétrole 4, Avenue de Bois Préau, F-92502 Rueil-Malmaison(FR)**

**EP 0 220 080 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet de nouvelles compositions d'oligomères de polyaryloxypyridine terminés par des groupes fonctionnels phtalonitriles. Elle concerne également la copolymérisation de ces compositions en présence d'un ou de plusieurs composés chimiques dérivés du benzhydrol porteurs d'un ou de plusieurs groupes ortho-dinitriles. L'invention concerne également les réseaux réticulés de polyaryloxypyridine co-polyphtalocyanines qui sont formés au cours des réactions de cyano-addition des groupements ortho-dinitriles et phtalonitriles.

Les composition à base de polyaryloxypyridine α,ω-bis(phtalonitrile) de l'invention peuvent être employées comme liants dans la fabrication des matériaux composites, comme adhésifs, comme vernis de revêtement et comme matières premières pour faire des objets moulés et des matériaux cellulaires.

La recherche de nouveaux polymères thermostables thermodurcissables par des réactions d'addition qui ne dégagent pas de composés volatils au moment de la mise en oeuvre suscite beaucoup d'intérêt pour préparer des matériaux denses, homogènes et à faible porosité. Pour atteindre cet objectif, les réactions de cyano-addition ont déjà été utilisées pour réticuler des monomères ou des oligomères fusibles et solubles. Ces réactions se produisent en effet par simple chauffage des réactifs moment de leur mise en oeuvre.

De telles réactions de cyano-addition ont été décrites avec des composés aromatiques, aliphatiques ou arylaliphatiques contenant des enchaînements amide, imine, éther, sulfone, cétone et imide. Ces réactions sont décrites par exemple dans les travaux de Walton et Griffith, Applied Polymer Symposium, 1975, 26, 429; Polymer Science and Technology, 1975, 98, 665; A.C.S. Division of Organic Coatings and Plastic Chemistry, 1978, 38, 596, de Keller et coll.,SAMPE Quarterly,juillet 1981,p.1 et de Marullo et Snow, A.C.S. Symposium Series, 1982, vol.195, p.325.

D'autres exemples de ces réactions sont donnés dans les brevets U.S. 3 890 274, 3 996 196, 4 056 560, 4 057 569, 4 102 873, 4 116 945, 4 136 107, 4 209 458, 4 223 123, 4 234 712, 4 238 601 et dans la demande de brevet français 84/11841. L'examen de ces travaux montre qu'il subsiste encore plusieurs problèmes en ce qui concerne la mise en oeuvre, la résistance au choc des matériaux et les conditions de polymérisation.

Pour la mise en oeuvre, les difficultés proviennent principalement du fait que les produits utilisés ont des températures de fusion ou de ramollissement égales ou supérieure à 200°C.

La résistance au choc des produits finis est généralement assez faible car la dimension des segments entre les motifs terminaux de type phtalonitrile est volontairement réduite pour conserver une température de fusion aussi basse que possible. Il a été récemment suggéré dans le brevet U.S. 4 409 382 d'employer des segments flexibilisants à base de polyéther-sulfone à degrés de polycondensation variables pour essayer d'améliorer les propriétés de résistance au choc.

En ce qui concerne les conditions de polymérisation, il est connu que la réaction des groupes phtalonitriles est très lente en l'absence de métaux ou de sels métalliques et qu'elle est peu sélective. Pour éviter l'emploi de composés métalliques, il a été préconisé par Marullo et Snow (voir référence déja citée) et dans les brevets U.S. 4 408 035 et 4 410 676 d'effectuer la réaction de polymérisation en présence de phénols ou d'amines primaires. Dans ces conditions, les temps de gel sont considérablement raccourcis et les températures de polymérisation sont plus basses. Il reste cependant que la structure des polymères ainsi formés n'est pas bien définie et que les sous-produits de transformation de ces additifs restent dans le matériau fini sous forme de petites molécules instables.

Dans la demande de brevet brevet français citée plus haut, il a été décrit une nouvelle méthode permettant de transformer les groupes phtalonitriles en macrocycles phtalocyanines ayant une très bonne stabilité thermique. Cette réaction a été observée sur des oligomères de polyimide terminés par des groupes fonctionnels orthodinitriles, contenant dans leur chaîne macromoléculaire des noyaux aromatiques liés entre eux par des groupes alcool secondaire (-CHOH-). Il a été montré dans le cas de ces oligomères que la formation de réseaux de polyimide co-polyphtalocyanines est une réaction assistée par un phénomène d'oxydo-réduction intramoléculaire des fonctions benzhydrol. Les compositions citées dans ce brevet ont d'excellentes propriétés thermiques, mais pour de nombreuses applications, leur température de fusion est trop élevée et les conditions de mise en oeuvre trop dures.

L'un des objets de la présente invention est de décrire de nouvelles compositions contenant des groupes phtalonitriles caractérisées par un temps de gel relativement court à une température de préférence inférieure à 250°C, des conditions de mise en oeuvre facilitées par rapport aux résines connues dans l'art antérieur et conduisant a des produits finis ayant de bonnes propriétés thermiques et mécaniques.

La présente invention concerne plus particulièrement la synthèse de nouvelles compositions d'oligomères de polyaryloxypyridine terminés par des groupes phtalonitriles. Ces oligomères présentent une très grande solubilité dans de nombreux solvants organiques et leur température de fusion est particulièrement intéressante pour de très nombreuses applications.

L'invention concerne aussi un procédé de réticulation de ces oligomères par des réactions de cyano-addition effectuées en présence d'un co-réactif dérivé du benzhydrol portant un ou plusieurs groupes ortho-dinitriles. Les produits réticulés formés principalement de polyaryloxypyridine co-polyphtalocyanines obtenus au cours des réactions de cyano-addition entrent aussi dans le cadre de l'invention.

L'invention a plus particulièrement pour objet des oligomères de polyaryloxypyridine terminés par des groupes phtalonitriles que l'on peut représenter par la formule générale:

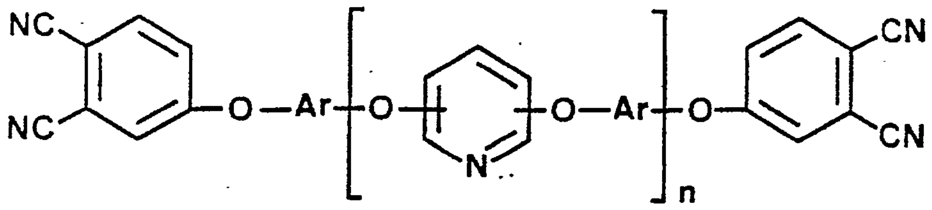

(1)

Dans cette formule, le radical Ar est un radical aromatique divalent carbocyclique ou hétérocyclique, dont les deux valences sont sur des atomes de carbone distincts. Le radical Ar peut être formé d'un cycle ou de plusieurs cycles qui sont alors accolés ou reliés entre eux, chaque cycle étant formé de préférence de 5 à 7 atomes, dont une partie peut consister en atomes d'oxygène, de soufre et/ou d'azote.

Lorsque le radical Ar comporte plusieurs cycles reliés entre eux, les éléments de liaison sont par exemple la liaison simple ou l'un des atomes et groupements suivants:
-O- ; -S- ; -SO- ; $-SO_2-$ ; $-CH_2-$ ; $-C(CH_3)_2-$ ; -CO- ; -CHOH- ; -COO- ; -CONH- ; $-Si(CH_3)_2-$ ; $-Si(CH_3)_2-O-Si(CH_3)_2-$.

Les éléments de liaison peuvent être également des radicaux divalents hydrocarbonés, partiellement ou totalement fluorés de type aliphatiques, arylaliphatiques ou cycloaliphatiques contenant de préférence de 1 à 10 atomes de carbone.

Les liaisons éthers entre le radical Ar et le cycle pyridine sont placées au milieu de ce dernier pour représenter l'existence d'isomères selon que les liaisons sont fixées sur l'un ou l'autre des atomes de carbone de la pyridine.

n est un nombre qui indique le degré moyen de polycondensation. Il peut prendre par exemple une valeur de 1 à 50; le nombre n n'est pas accessible directement, mais sa valeur moyenne se déduit des proportions molaires respectives des réactifs utilisés pour préparer les compositions d'oligomères de polyaryloxypyridine.

La méthode générale de synthèse des compositions de formule générale (1) consiste en une réaction de condensation nucléophile entre une composition d'oligomères de polyaryloxypyridine à terminaisons phénolates alcalins, que l'on peut représenter par la formule générale:

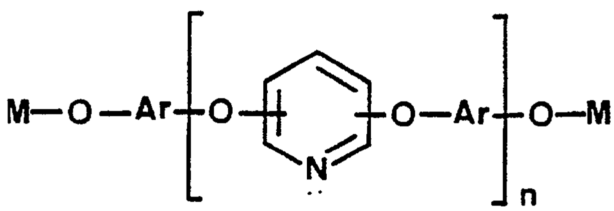

(2)

avec le nitro-4 phtalonitrile, de formule:

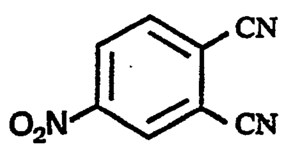

(3)

dont la quantité mise en oeuvre correspond à un nombre de groupes nitrés au moins égal au nombre de groupes phénolates disponibles de la composition de formule (2), par exemple de 1 à 1,5 groupe nitré par groupe phénolate.

Dans ces formules, M représente un atome de métal alcalin, de préférence le sodium ou le potassium, et Ar a la signification indiquée précédemment.

Les compositions d'oligomères de polyaryloxypyridine à terminaisons phénolates de formule générale (2) peuvent être préparées par réaction d'une dihalogéno-2,6 pyridine ou d'une dihalogéno-2,4 pyridine de formules:

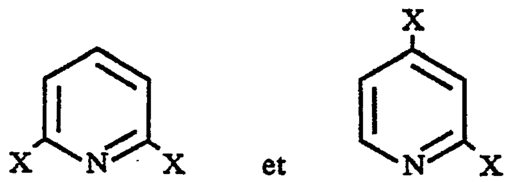 (4)

avec un excès par rapport à la stoechiométrie moléculaire, d'au moins un diphénolate de formule générale:

M-O-Ar-O-M (5)

dérivé du diphénol correspondant.

Dans ces formules, M et Ar ont la signification indiquée précédement et X représente un atome d'halogène, de préférence le chlore ou le brome.

Parmi les diphénols qui conviennent plus particulièrement dans l'invention, on peut citer le dihydroxy-1,2 benzène, le dihydroxy-1,3 benzène, le dihydroxy-1,4 benzène, les dihydroxytoluènes, les dihydroxyxylènes, les dihydroxynaphtalènes, le dihydroxy-2,2' biphényle, le dihydroxy-3,3' biphényle, le dihydroxy-4,4' biphényle, le bis-(hydroxy-3 phényl) méthane, le bis-(hydroxy-4 phényl) méthane, le bis-(hydroxy-3 phényl) éther, le bis-(hydroxy-4 phényl) éther, le bis-(hydroxy-3 phényl) sulfure, le bis-(hydroxy-4 phényl) sulfure, la bis-(hydroxy-3 phényl) sulfone, la bis-(hydroxy-4 phényl) sulfone, le bis-(hydroxy-3 phényl) sulfoxyde, le bis-(hydroxy-4 phényl) sulfoxyde, la dihydroxy-3,3' benzophénone, la dihydroxy-4,4' benzophénone, le bis-(hydroxy-4 phényl)-2,2 propane, le bis-(hydroxy-4 phényl)-2,2 hexafluoro-1,1,1,3,3,3 propane, le bis-(hydroxy-3 phényl) diméthylsilane, le bis-(hydroxy-4 phényl) diméthylsilane, le bis-(hydroxy-3 phényl)-1,3 tétraméthyl-1,1,3,3 disiloxane, et le bis-(hydroxy-4 phényl)-1,3 tétraméthyl-1,1,3,3 disiloxane,

Parmi les dihalogénopyridines utilisables plus particulièrement dans le cadre de la présente invention, on peut citer la difluoro-2,6 pyridine, la dichloro-2,6 pyridine, la dibromo-2,6 pyridine, la diiodo-2,6 pyridine, la difluoro-2,4 pyridine, la dichloro-2,4 pyridine, la dibromo-2,4 pyridine et la diiodo-2,4 pyridine.

Les compositions de formule générale (1) sont préparées en plusieurs étapes successives avec ou sans isolement des composés intermédiaires. L'un des modes préférés consiste à réaliser cette synthèse en trois étapes consécutives dans le même réacteur, sans isoler les produits intermédiaires.

Dans la première étape, un diphénol est transformé en diphénolate alcalin de formule (5) par réaction avec un métal alcalin, un hydroxyde, un carbonate ou un alcoolate de métal alcalin. Cette réaction est effectuée selon des méthodes bien connues, de préférence en solution dans un solvant organique polaire auquel on ajoute un hydrocarbure aliphatique ou aromatique qui permet d'éliminer l'eau de la réaction, lorsqu'il y en a, par distillation azéotropique. Dans tous les cas il est préférable de maintenir le milieu réactionnel à l'abri de l'humidité.

Dans la seconde étape, la dihalogénopyridine de formule (4) est ajoutée au diphénolate (5), dans des proportions moléculaires telles qu'il y ait toujours un excès de ce dernier réactif. Ainsi la proportion molaire du diphénolate (5) à la dihalogénopyridine (4) est en général d'environ 1,02/1 à 2/1, de manière que l'on obtienne une composition d'oligomères de polyaryloxypyridine à terminaisons phénolates de formule générale (2) avec un degré moyen de polycondensation convenable (n de 1 à 50). Cette réaction de condensation qui conduit à la formation d'enchaînements éthers est effectuée par chauffage entre 50 et 300°C, de préférence entre 90 et 250°C. Elle peut être effectuée à la fusion des réactifs, mais il est préférable d'employer un solvant organique polaire comme par exemple la N-méthyl pyrrolidone, le diméthylsulfoxyde, le diméthylacétamide ou le diméthylformamide.

La dernière étape consiste à ajouter le nitro-4 phtalonitrile (3) dans des conditions telles que s'effectue la substitution nucléophile des groupes nitrés par les fonctions terminales phénolates, ce qui conduit à la formation d'enchaînements éthers reliant le phtalonitrile aux chaînes de polyaryloxypyridine et à l'obtention des compositions d'oligomères de formule (1). Selon la nucléophilie des groupements phénolates, la réaction est faite à une température supérieure à la température ambiante et de préférence de l'ordre de 50 à 100°C. Le groupement nitré, activé par les deux fonctions nitriles, constitue un très bon groupe partant et la réaction de substitution se fait dans des conditions généralement plus douces qu'avec les atomes d'halogène. L'utilisation d'un solvant organique polaire aprotique permet d'effectuer la réaction à une température modérée avec d'excellents rendements.

Selon un autre mode, la préparation des compositions d'oligomères de formule (1) peut être conduite en quatre étapes successives avec isolement des produits intermédiaires.

La première étape consiste encore en la préparation du diphénolate alcalin (5). Celui-ci est ensuite opposé, dans la deuxième étape, à un excès de dihalogénopyridine (4) pour préparer une composition d'oligomères de polyaryloxypyridine à terminaisons halogénées qui peut être représentée par la formule générale:

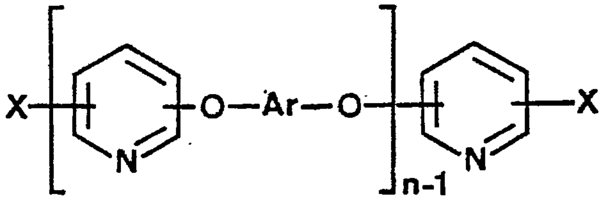 (6)

Dans cette formule, Ar, X et n ont chacun la même signification qu'indiqué précédemment.

La proportion molaire de la dihalogénopyridine (4) au diphénolate (5) est en général d'environ 1,02/1 à 2/1, de manière que la réaction permette de préparer des compositions d'oligomères de polyaryloxypyridine à terminaisons halogénées avec un degré moyen de polycondensation convenable: (n-1) de 1 à environ 50.

Cette composition (6) est ensuite mise en réaction, dans la troisième étape, avec au moins un équivalent molaire par terminaison halogénée de la composition (6) de diphénolate (5) pour préparer une composition d'oligomères de formule générale (2).

La dernière étape est, comme précédemment, la condensation de ce produit (2) sur le nitro-4 phtalonitrile (3).

Prises séparément, les diverses réactions menant aux compositions d'oligomères de polyaryloxypyridine (2) sont connues : par exemple, la substitution des atomes d'halogène activés, c'est à dire placés en position 2, 4 ou 6 de la pyridine, par des anions phénolates a été décrite dans le brevet français 1 527 714 et dans le brevet de la République fédérale d'Allemagne 1 934 889. Les réactions de substitution des groupes nitrés activés par divers substituants nucléophiles sont également connues de l'art antérieur. En revanche, la dernière étape de la préparation des oligomères de polyaryloxypyridine α,ω-bis(phtalonitrile) (1), réticulables par réaction de cyano-addition, n'a jamais été décrite antérieurement.

Les compositions de polyaryloxypyridine à fonctions terminales phtalonitriles de l'invention présentent une remarquable solubilité dans de très nombreux solvants organiques comme par exemple le chlorure de méthylène, le tétrachloréthane, le trichloro-1,1,1 éthane, les cétones, les éthers, les amides, les urées, les nitriles, le dioxanne, le tétrahydrofuranne, etc.

L'invention concerne également la transformation de ces compositions de polyaryloxypyridine α,ω -bis(phtalonitrile) en réseaux de polyaryloxypyridine co-polyphtalocyanines par réaction avec des dérivés du benzhydrol contenant un ou plusieurs centres réactifs ortho-dinitriles. Ce co-réactif a pour rôle de fournir les deux atomes d'hydrogène nécessaires à la transformation de quatre motifs phtalonitriles en un macrocycle phtalocyanine aromatique à 18 électrons. La fonction alcool du benzhydrol joue le rôle d'un agent réducteur et, au cours de la réaction, elle s'oxyde en cétone pour donner un dérivé de la benzophénone. Le processus de formation des cycles phtalocyanines peut être représenté, à titre d'exemple, par le schéma réactionnel suivant, dans lequel on a fait figurer les groupements terminaux phtalonitrile de trois molécules de polyaryloxypyridine α,ω -bis(phtalonitrile) et un groupement terminal ortho-dinitrile d'un dérivé du benzhydrol.

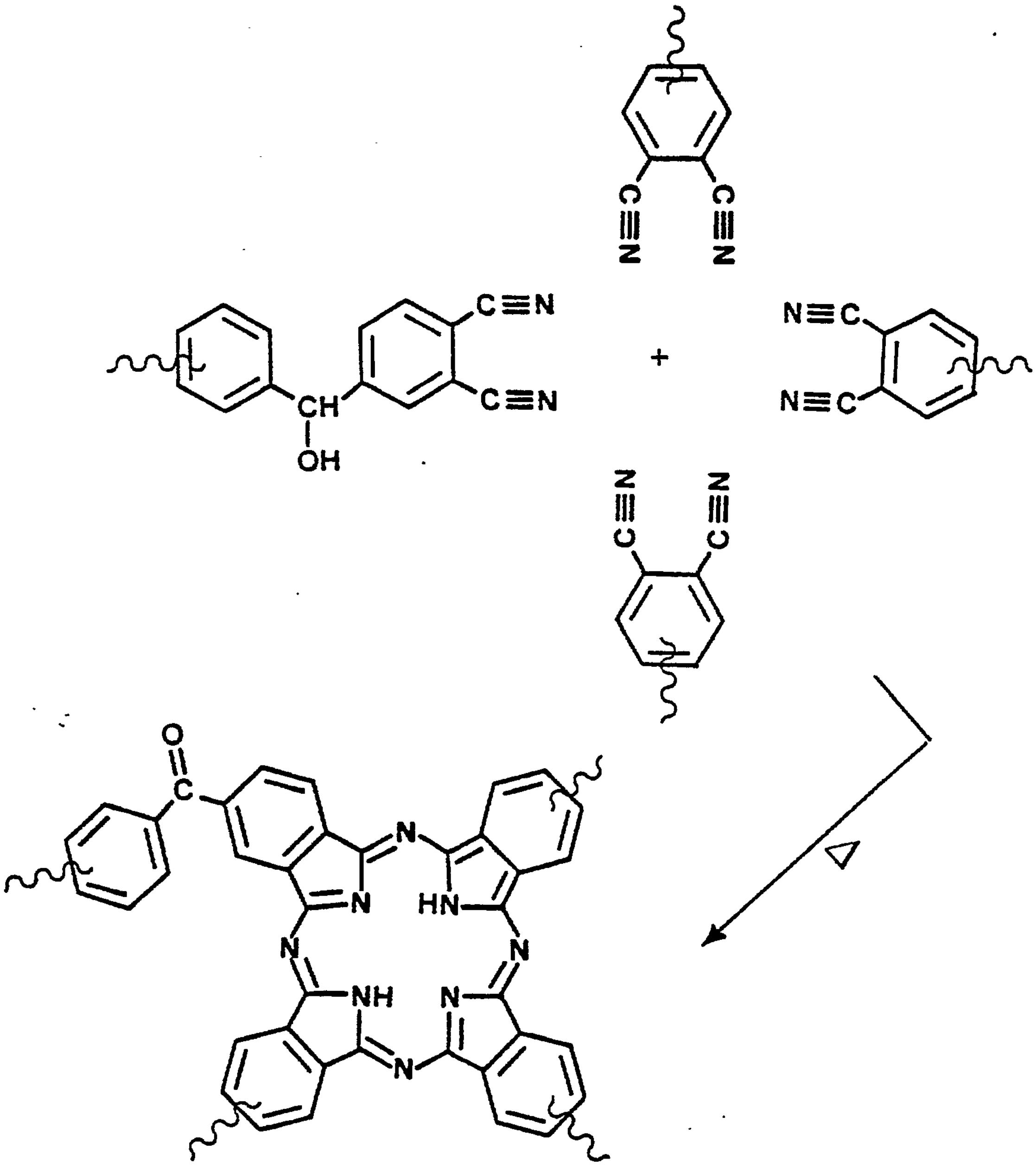


Le co-réactif dérivé du benzhydrol mis en jeu dans cette réaction peut comporter par exemple un ou deux groupes ortho-dinitriles; il est alors représenté par l'une des formules générales:

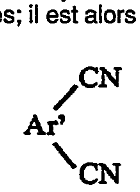 et 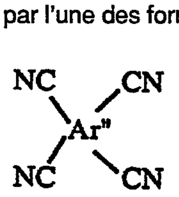 (7)

où Ar' est un radical aromatique divalent formé de plusieurs cycles accolés ou reliés entre eux comme défini précédemment pour le radical Ar, au moins deux cycles étant en outre reliés par un groupement -CHOH-, les deux valences dudit radical étant sur des atomes de carbone distincts situés en position ortho d'un même cycle; et Ar" est un radical aromatique tétravalent formé de plusieurs cycles accolés ou reliés entre eux comme défini précédemment pour le radical Ar, au moins deux cycles étant en outre reliés par un groupement -CHOH-, les quatre valences dudit radical étant sur des atomes de carbone distincts situés deux à deux en position ortho d'un même cycle.

Parmi les co-réactifs de formule générale (7) utilisables avantageusement, on peut citer le dicyano-3,4 benzhydrol, le phénoxy-3' dicyano-3,4 benzhydrol, le phénoxy-4' dicyano-3,4 benzhydrol, le (dicyano-3,4 phénoxy)-3 benzhydrol et le (dicyano-3,4 phénoxy)-4 benzhydrol qui comportent un groupement fonctionnel ortho-dinitrile, le tétracyano-3,3',4,4' benzhydrol, le bis-(dicyano-3,4 phénoxy)-3,3' benzhydrol, le bis-(dicyano-3,4 phénoxy)-4,4' benzhydrol, le paraphénylènedioxy bis-(dicyano-3,4 benzhydrol)-3,3', le paraphénylènedioxy bis-(dicyano-3,4 benzhydrol)-4,4', le métaphénylènedioxy bis-(dicyano-3,4 benzhydrol)-3,3', le métaphénylènedioxy bis-(dicyano-3,4 benzhydrol)-4,4' et le bis-(((dicyano-3,4 phénoxy)-4 phénylhydroxyméthylène)-4 phénoxy)-2,6 pyridine qui comportent deux groupements fonctionnels ortho-dinitriles.

Les proportions respectively d'oligomères de formule générale (1) et de co-réactif de formule générale (7) sont ajustées de façon que le pourcentage molaire des fonctions alcool secondaire du benzhydrol par rapport à la totalité des groupements orthodinitriles soit de 10 à 50% et de préférence de 20 à 30%.

Les mélanges formés par les compositions de polyaryloxypyridine α,ω -bis-(phtalonitrile) (1) et du co-réactif dérivé du benzhydrol (7) ont une température de ramollissement ou de fusion qui, selon les formulations, va généralement de 30 à 200°C et, de préférence de 50 à 150°C.

La réaction de réticulation par formation des macrocycles phtalocyanines est effectuée par chauffage du mélange à une température de 180 à 300°C, de préférence de 200 à 250°C.

Selon les proportions des divers constituants, le temps de gel peut varier de quelques minutes à quelques heures et, à la fin de la réaction de réticulation, il y a formation d'un matériau dont la température de transition vitreuse est généralement comprise entre 150 et 250°C.

Lorsqu'ils sont étudiés au moyen de l'analyse thermogravimétrique dynamique, ces matériaux montrent un seuil de décomposition à l'air qui se situe entre 300 et 500°C.

L'invention sera décrite de façon plus précise en liaison avec les exemples spécifiques ci-après dans lesquels les détails sont donnés à titre illustratif et non limitatif. Dans ces exemples, les réactions de polycondensation sont effectuées sous agitation et en atmosphère inerte d'azote ou d'argon pour éviter toute réaction d'oxydation.

Les produits obtenus sont caractérisés par l'analyse élémentaire, la spectroscopie infrarouge, la résonance magnétique nucléaire du proton et du carbone-13, l'analyse enthalpique différentielle et la chromatographie d'exclusion stérique.

Les exemples 1 à 3 illustrent la méthode de préparation de compositions d'oligomères de polyaryloxypyridine terminés par des groupements phtalonitriles dans laquelle les produits intermédiaires sont isolés. Dans les exemples 4 à 9, les oligomères sont préparés sans isolement des produits intermédiaires. les autres exemples, 10 et 11, concernent la formation des résines réticulées de polyaryloxypyridine co-polyphtalocyanines.

Exemple 1.

Un mélange de 59,2 g (0,4 mole) de dichloro-2,6 pyridine, 45,6 g de (0,2 mole) de bis-(hydroxy-4 phényl)-2,2 propane, 41,5 g (0,3 mole) de carbonate de potassium, 0,1 litre de N-méthyl pyrrolidone et 0,07 litre de toluène est chauffé pendant 5 heures à 130°C, avec élimination par distillation azéotropique de l'eau formée au cours de la réaction.

Le toluène est ensuite distillé et la solution est versée dans un litre d'eau. Le produit qui précipite est lavé à l'eau et séché sous pression réduite. Il est purifié par recristallisation dans un mélange de 75% en volume d'hexane et de 25% en volume de toluène. Cette opération donne 72 g, soit un rendement de 80%, d'un produit blanc bien cristallisé dont la température de fusion est de 144°C. L'analyse de ce composé permet de l'identifier au bis-((chloro-2 pyridyl-6-oxy)-4 phényl)-2,2 propane répondant à la formule:

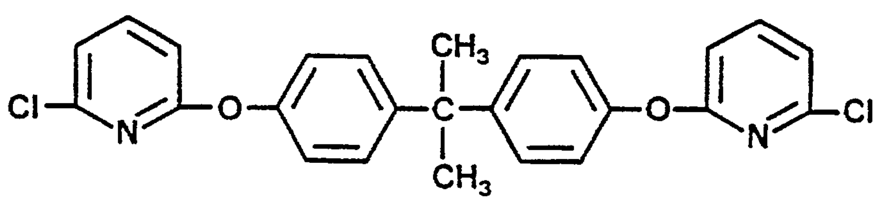

Exemple 2.

Un mélange de 13,7 g (0,06 mole) de bis-(hydroxy-4 phényl)-2,2 propane, 12,4 g (0,09 mole de carbonate de potassium, 0,03 litre de N-méthyl pyrrolidone et 0,02 litre de toluène est chauffé pendant 4 heures à 120-130°C avec élimination par distillation azéotropique de l'eau formée au cours de la réaction. Le toluène est distillé en totalité avant addition de 13,5 g (0,03 mole) du bis-((chloro-2 pyridyl-6-oxy)-4 phényl)-2,2 propane préparé dans l'exemple 1.

La réaction est poursuivie par chauffage du milieu réactionnel à 150°C pendant 4 heures. Le mélange refroidi est versé dans une solution aqueuse normale de soude. Les impuretés organiques sont éliminées par extraction avec deux fois 0,1 litre d'éther éthylique. La solution sodique est acidifiée par addition progressive d'acide chlorhydrique. Le précipité formé est isolé par filtration, lavé à l'eau jusqu'à neutralité et séché à 100°C sous pression réduite. Le produit, obtenu avec un rendement de 90%, peut être identifié à une polyaryloxypyridine-diphénol, représentée par la formule:

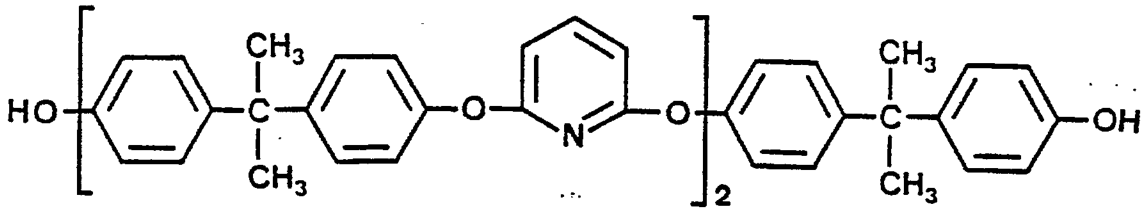

Exemple 3.

Un mélange de 8,35 g (0,01 mole) de polyaryloxypyridine α,ω-diphénol, préparée dans l'exemple 2, 4,14 g (0,03 mole de carbonate de potassium et 0,03 litre de diméthylsulfoxyde est désaéré pendant 30 minutes en atmosphère d'argon. A la fin de cette opération, 3,46 g (0,02 mole) de nitro-4 phtalonitrile sont ajoutés en une seule fois et le mélange est chauffé à 70°C pendant 2 heures. Le mélange refroidi est versé dans une solution aqueuse d'acide chlorhydrique dilué. Le produit obtenu avec un rendement de 97% (10,5 g) a une température de transition vitreuse de 83°C et les méthodes analytiques permettent de lui attribuer la structure suivante:

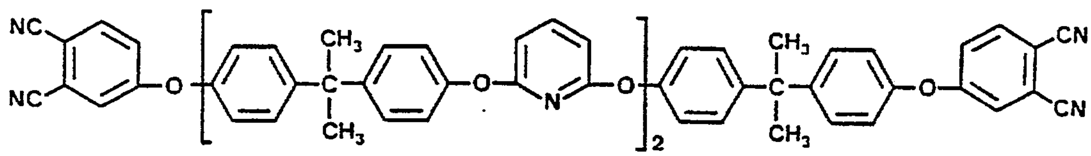

Exemple 4.

Un réacteur de 100 ml est chargé avec 4,8 g (0,12 mole) de soude en pastilles, 5 ml d'eau, 30 ml de diméthylsulfoxyde et 13,7 g (0,06 mole) de bis-(hydroxy-4 phényl)-2,2 propane. Le mélange est désaéré pendant 30 minutes et, après addition de 20 ml de toluène, il est progressivement chauffé à 120-130°C pendant une heure avec distillation azéotropique de l'eau. Le toluène est éliminé par distillation puis remplacé par 20 ml de toluène anhydre. Cette opération est répétée encore une fois.

La dichloro-2,6 pyridine (4,44 g ; 0,03 mole) est ajoutée au mélange refroidi et, après quelques minutes d'agitation, la température est portée à 150°C pendant 3,5 heures. Elle est ensuite ramenée à 70°C avant l'addition de 10,9 g (0,063 mole) de nitro-4 phtalonitrile et de 12,42 g (0,09 mole) de carbonate de potassium anhydre. La réaction est poursuivie à 70°C pendant 2 heures.

Le produit de la réaction est obtenu avec un rendement de 96% (22,5 g) par précipitation dans de l'eau acidifiée, lavage et séchage. L'analyse de ce composé indique que sa température de transition vitreuse est de 70°C et que sa structure moléculaire correspond à un oligomère de polyaryloxypyridine α,ω-bis(phtalonitrile) ayant un degré moyen de polycondensation égal à 1.

Exemples 5 à 9.

Une série de polyaryloxypyridineα,ω-bis(phtalonitrile) de masse moléculaire croissante, dont le degré moyen de polycondensation (DPn) varie de 2 à 50 est préparée dans des conditions identiques à celles décrites dans l'exemple 4. Les proportions des différents réactifs sont indiquées dans le tableau suivant.

TABLEAU

| Poids en grammes de Exemple | Diphénol[1)] | Soude | Dichloro-2,6 pyridine | Nitro-4 phtalonitrile | $\overline{DPn}$ |
|---|---|---|---|---|---|
| 5 | 13,7 | 4,8 | 5,92 | 7,27 | 2 |
| 6 | 13,7 | 4,8 | 7,40 | 3,63 | 5 |
| 7 | 13,7 | 4,8 | 8,07 | 1,99 | 10 |
| 8 | 13,7 | 4,8 | 8,45 | 1,05 | 20 |
| 9 | 13,7 | 4,8 | 8,70 | 0,44 | 50 |

[1)] bis-(hydroxy-4 phényl-2,2 propane.

Les produits obtenus dans les exemples 4 à 9 ont la structure de polyaryloxypyridine α,ω-bis-(phtalonitrile) que l'on peut représenter par la formule:

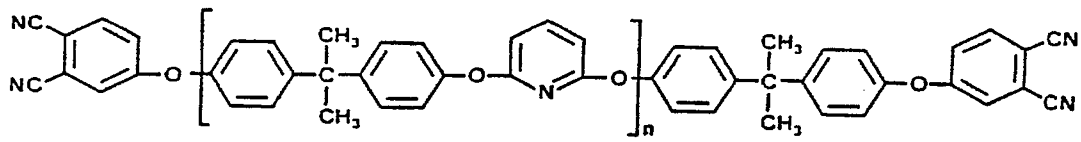

dans laquelle n prend la valeur indiquée pour le DPn.

Exemple 10.

Un mélange de 345 mg de polyaryloxypyridine α,ω-bis-(phtalonitrile) ayant un degré moyen de polycondensation de 2, préparé comme décrit dans l'exemple 3, ce qui correspond à environ 0,635/1000 groupements ortho-dinitriles, et de 55 mg de dicyano-3,4 benzhydrol, soit 0,235/1000 fonctions hydroxyles et un rapport des fonctions hydroxyles aux groupements ortho-dinitriles de 27%, est homogénéisé à l'état fondu à 120°C. Après refroidissement, le produit broyé a une température de ramollissement située vers 70°C.

Le mélange est polymérisé pendant 3 heures à 250° à l'air. La masse en réaction prend rapidement une couleur verte et sa viscosité dynamique à l'état fondu augmente jusqu'à ce qu'il y ait gélification. A la fin de ce traitement, le matériau obtenu présente une température de transition vitreuse de 175°C.

Exemple 11.

Un mélange de 350 mg de polyaryloxypyridine α,ω-bis(phtalonitrile) ayant un degré moyen de polycondensation de 1, préparée comme décrit dans l'exemple 4 (soit 0,894/1000 groupements ortho-dinitriles) et de 77 mg de dicyano-3,4 benzhydrol, soit 0,329/1000 fonctions hydroxyles et un rapport des fonctions hydroxyles aux groupements ortho-dinitriles de 27%, est traité dans les conditions de l'exemple 10. Avant le traitement thermique, le mélange a une température de ramollissement de 50°C et à la fin du chauffage à 250°C, il a une température de transition vitreuse de 210°C.

Le produit final est soumis à un traitement de recuit de une heure à 300°C pour achever la réaction de réticulation. Après ce traitement, la stabilité thermique du matériau, déterminée par l'analyse thermogravimétrique dynamique avec une montée en température de 10°C par minute, présente un seuil de décomposition situé vers 415°C.

**Revendications**

1- Composition d'oligomères de polyaryloxypyridine à terminaisons phtalonitriles, caractérisée en ce qu'elle est obtenue par formation d'une composition d'oligomères de polyaryloxypyridine à terminaisons phénolates alcalins à partir d'au moins un diphénolate alcalin et d'au moins une dihalogénopyridine, suivie de la réaction, sur ladite composition d'oligomère de polyaryloxypyridine à terminaisons phénolates alcalins, de nitro-4 phtalonitrile.

2- Composition selon la revendication 1, caractérisée en ce que les proportions des réactifs correspondent à un degré de polycondensation moyen de 1 à 50.

3- Composition selon l'une des revendications 1 et 2, caractérisée en ce qu'elle est représentée par la formule générale

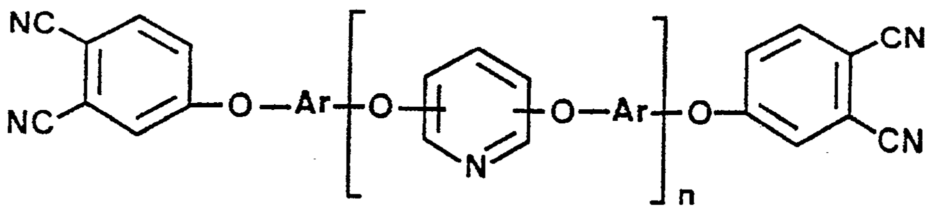

dans laquelle Ar représente un radical aromatique divalent, carbocyclique ou hétérocyclique, formé d'un ou de plusieurs cycles accolés ou reliés entre eux par une liaison simple ou par un atome ou un groupement divalent, les deux valences dudit radical aromatique Ar étant situées sur deux atomes de carbone distincts; et n représente le degré moyen de polycondensation.

4- Composition selon l'une des revendications 1 à 3, caractérisée en ce que ledit diphénolate alcalin dérive d'un diphénol choisi parmi le dihydroxy-1,2 benzène, le dihydroxy-1,3 benzène, le dihydroxy-1,4 benzène, les dihydroxytoluènes, les dihydroxyxylènes, les dihydroxynaphtalènes, le dihydroxy-2,2' biphényle, le dihydroxy-3,3' biphényle, le dihydroxy-4,4' biphényle, le bis-(hydroxy-3 phényl) méthane, le bis-(hydroxy-4 phényl) méthane, le bis-(hydroxy-3 phényl) éther, le bis-(hydroxy-4 phényl) éther, le bis-(hydroxy-3 phényl) sulfure, le bis-(hydroxy-4 phényl) sulfure, la bis-(hydroxy-3 phényl) sulfone, la bis-(hydroxy-4 phényl) sulfone, le bis-(hydroxy-3 phényl) sulfoxyde, le bis-(hydroxy-4 phényl) sulfoxyde, la dihydroxy-3,3' benzophénone, la dihydroxy-4,4' benzophénone, le bis-(hydroxy-4 phényl)-2,2 propane, le bis-(hydroxy-4 phényl)-2,2 hexafluoro-1,1,1,3,3,3 propane, le bis-(hydroxy-3 phényl) diméthylisilane, le bis-(hydroxy-4 phényl) diméthylsilane, le bis-(hydroxy-3 phényl)-1,3 tétraméthyl-1,1,3,3 disiloxane, et le bis-(hydroxy-4 phényl)-1,3 tétraméthyl-1,13,3 disiloxane et en ce que ladite dihalogénopyridine est choisie parmi la difluoro-2,6 pyridine, la dichloro-2,6 pyridine, la dibromo-2,6 pyridine, la diiode-2,6 pyridine,la difluoro-2,4 pyridine, la dichloro-2,4 pyridine, la dibromo-2,4 pyridine et la diiodo-2,4 pyridine.

5- Composition selon l'une des revendications 1 à 4, caractérisée en ce que ledit diphénolate alcalin dérive du bis-(hydroxy-4 phényl)-2,2, propane et ladite dihalogénopyridine est la dichloro-2,6 pyridine.

6- Procédé de préparation d'une composition selon l'une des revendications 1 à 5, caractérisé en ce qu'il comprend une étape (a), dans laquelle on prépare un diphénolate alcalin en faisant réagir un diphénol avec un reactif alcalin choisi parmi les metaux alcalins, leurs hydroxydes, leurs carbonates et leurs alcoolates; une étape (b), dans laquelle on fait réagir le diphénolate obtenu à l'issue de l'étape (a) avec une dihalogénopyridine en proportions molaires de 1,02/1 à 2/1, de manière à former une composition d'oligomères de polyaryloxypyridine à terminaisons phénolates alcalins avec un degré moyen de polycondensation de 1 à 50; et une étape (c), dans laquelle on fait réagir le produit issu de l'étape (b) avec du nitro-4 phtalonitrile à raison de 1 à 1,5 groupes nitrés par groupe phénolate.

7- Procédé de préparation d'une composition selon l'une des revendications 1 à 5, caractérisé en ce qu'il comprend une étape (a), dans laquelle on prépare un diphénolate alcalin en faisant réagir un diphénol avec un réactif alcalin choisi parmi les métaux alcalins, leurs hydroxydes, leurs carbonates et leurs alcoolates; une étape (b), dans laquelle on fait réagir le diphénolate obtenu à l'issue de l'étape (a) avec une dihalogénopyridine en des proportions molaires de la dihalogénopyridine au diphénolate de 1,02/1 à 2/1, de manière à former une composition d'oligomères de polyaryloxypyridine à terminaisons halogénées avec un degré moyen de polycondensation de 1 à 50 que l'on isole; une étape (b') dans laquelle on fait réagir la composition issue de l'étape (b) avec du diphénolate à raison d'au moins un équivalent molaire de diphénolate par terminaison halogénée, de manière à former une composition d'oligomères de polyaryloxypyridine à terminaisons phénolates ayant un degré de polycondensation de 2 à 50, que l'on isole; et une étape (c), dans laquelle on fait réagir le produit issu de l'étape (b') avec du nitro-4 phtalonitrile à raison de 1 à 1,5 groupes nitrés par groupe phénolate.

8- Procédé selon l'une des revendication 6 et 7, caractérisé en ce que la réaction de l'étape (c) est effectuée en solution dans un solvant polaire aprotique à une température de l'ordre de 50 à 100°C.

9- Utilisation d'une composition d'oligomères de polyaryloxypyridine à terminaisons phtalonitriles selon l'une des revendications 1 à 5 dans la fabrication de réseaux de polyaryloxypyridine co-polyphtalocyanines, caractérisée en ce que ladite composition est soumise à des conditions de polymérisation en présence d'au moins un co-réactif dérivé du benzhydrol répondant à la formule

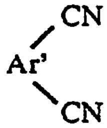

ou

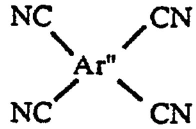

où Ar' est un radical aromatique divalent formé de plusieurs cycles accolés ou reliés entre eux, au moins deux cycles étant en outre reliés par un groupement -CHOH-, les deux valences dudit radical étant sur des atomes de carbone distincts situés en position ortho d'un même cycle; et Ar" est un radical aromatique tétravalent formé de plusieurs cycles accolés ou reliés entre eux, au moins deux cycles étant en

outre reliés par un groupement -CHOH-, les quatre valences dudit radical étant sur des atomes de carbone distincts situés deux à deux en position ortho d'un même cycle, ledit co-réactif étant mis en jeu en une proportion correspondant à 10 à 50% en fonctions -CHOH- par rapport au nombre total de groupements ortho-dinitriles.

10- Utilisation selon la revendication 9, caractérisée en ce que ledit co-réactif dérivé du benzhydrol est choisi parmi le dicyano-3,4 benzhydrol, le phénoxy- 3' dicyano-3,4 benzhydrol, le phénoxy-4' dicyano-3,4 benzhydrol, le (dicyano-3,4 phénoxy)-3 benzhydrol et le (dicyano-3,4 phénoxy)-4 benzhydrol qui comportent un groupement fonctionnel ortho-dinitrile, le tétracyano-3,3',4,4' benzhydrol, le bis-(dicyano-3,4 phénoxy)-3,3' benzhydrol, le bis-(dicyano-3,4 phénoxy)-4,4' benzhydrol, le paraphénylènedioxy bis-(dicyano-3,4 benzhydrol)-3,3', le paraphénylènedioxy bis-(dicyano-3,4 benzhydrol)-4,4', le métaphénylènedioxy bis-(dicyano-3,4 benzhydrol)-3,3' le métaphénylènedioxy bis-(dicyano-3,4 benzhydrol)-4,4' et le bis-(((dicyano-3,4 phénoxy)-4 phénylhydroxyméthylène)-4 phénoxy)-2,6 pyridine qui comportent deux groupements fonctionnels ortho-dinitriles.

11- Réseau de polyaryloxypyridine co-polyphtalocyanine obtenu comme décrit dans l'une des revendications 9 et 10.

## Claims

1. A composition of polyaryloxypyridine oligomers with phthalonitrile end groups, obtained by formation of a composition of polyaryloxypyridine oligomers with alkali phenolate end groups from at least one alkali diphenolate and at least one dihalogenopyridine, followed by the reaction with said composition of polyaryloxypyridine oligomers having alkali phenolate end groups, of 4-nitrophthalonitrile.

2. A composition according to claim 1, wherein the reactants proportions correspond to an average polycondensation degree of 1 to 50.

3. A composition according to one of claims 1 and 2, characterized in that it corresponds to the general formula:

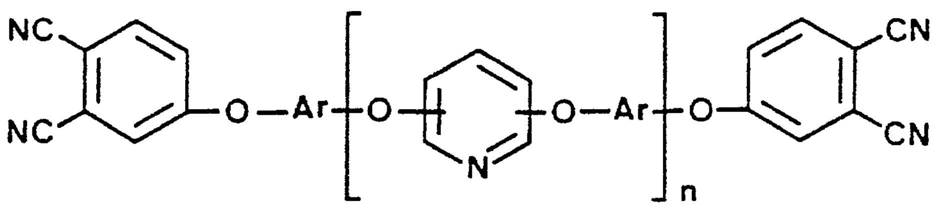

wherein Ar is a divalent carbocyclic or hetero cyclic aromatic radical, formed of one or more rings, fused or interlinked through a single bond or through an atom or a divalent group, the two valences of said aromatic radical Ar being on two separate carbon atoms, and wherein n is the average polycondensation degree.

4. A composition according to one of claims 1 to 3, characterized in that said alkali phenolate derives from a diphenol selected from 1,2-dihydroxybenzene, 1,3-dihydroxybenzene, 1,4-dihydroxybenzene, dihydroxytoluenes, dihydroxyxylenes, dihydroxynaphthalenes, 2,2'-dihydroxybiphenyl, 3,3'-dihydroxybiphenyl, 4,4'-dihydroxybiphenyl, bis(3-hydroxyphenyl)methane, bis(4-hydroxyphenyl)methane, bis(3-hydroxyphenyl)ether, bis(4-hydroxyphenyl)ether, bis(3-hydroxyphenyl)sulfide, bis(4-hydroxyphenyl)sulfide, bis(3-hydroxyphenyl)sulfone, bis(4-hydroxyphenyl)sulfone, bis(3-hydroxyphenyl)sulfoxide, bis(4-hydroxyphenyl)sulfoxide, 3,3'-dihydroxybenzophenone, 4,4'-dihydroxybenzophenone, 2,2-bis(4-hydroxyphenyl)propane, 2,2-bis(4-hydroxyphenyl)1,1,1,3,3,3-hexafluoropropane, bis(3-hydroxyphenyl)dimethylsilane, bis(4-hydroxyphenyl)dimethylsilane, 1,3-bis(3-hydroxyphenyl)1,1,3,3-tetramethyldisiloxane, and 1,3-bis(4-hydroxyphenyl)1,1,3,3-tetramethyl disiloxane and in that said dihalogenopyridine in selected from 2,6-difluoropyridine, 2,6-dichloropyridine, 2,6-dibromopyridine, 2,6-diiodopyridine, 2,4-difluoropyridine, 2,4-dichloropyridine, 2,4-dibromopyridine, 2,4-diiodopyridine.

5. A composition according to one of claims 1 to 4, characterized in that said alkali diphenolate derives from 2,2-bis(4-hydroxyphenyl)propane and said dihalogenopyridine is 2,6-dichloropyridine.

6. A process for preparing a composition according to one of claims 1 to 5, characterized in that it comprises a step (a) of preparing an alkali diphenolate by reacting a diphenol with an alkali reactant selected from alkali metals, their hydroxides, their carbonates and their alcoholates, a step (b) of reacting the diphenolate obtained in step (a) with a dihalogenopyridine in molar proportions from 1.02/1 to 2/1, so as to form a composition of polyaryloxypiridine oligomers with alkali phenolate end groups, having an average polycondensation degree of 1 to 50, and a step (c) of reacting the product obtained in step (b) with 4-nitrophthalonitrile in a proportion of 1 to 1.5 nitrogen-containing groups per phenolate group.

7. A process for preparing a composition according to one of claims 1 to 5, characterized in that it comprises a step (a) of preparing an alkali diphenolate by reacting a diphenol with an alkali reactant selected from alkali metals, their hydroxides, their carbonates and their alcoholates, a step (b) of reacting the diphenolate obtained in step (a) with a dihalogenopyridine in molar proportions of dihalogenopyridine to

diphenolate from 1.02/1 to 2/1; so as to form a composition of polyaryloxypyridine oligomers with halogenated end groups, having an average polycondensation degree of 1 to 50, a step (b') of reacting the composition obtained in step (b) with diphenolate in a proportion of at least one diphenolate molar equivalent per halogenated end group, so as to form a composition of polyaryloxypyridine oligomers with phenolate end groups having a polycondensation degree of 2 to 50 which is separated, and a step (c) of reacting the product obtained in step (b') with 4-nitrophthalonitrile in a proportion of 1 to 1.5 nitrogen-containing groups per phenolate group.

8. A process according to one of claims 6 and 7, characterized in that the reaction of step (c) is performed in an aprotic polar solvent, at a temperature of about 50–100°C.

9. The use of a composition of polyaryloxypiridine oligomers with phthalonitrile end groups according to one of claims 1 to 5, for manufacturing polyaryloxypyridine co-phthalocyanine lattices, characterized in that said composition is subjected to polymerization conditions in the presence of at least one co-reactant deriving from benzhydrol and complying with the formula:

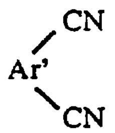
or
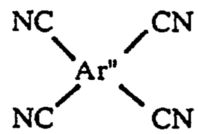

wherein Ar' is a divalent aromatic radical formed of several fused or interlinked rings, at least two rings being further linked through a –CHOH– group, the two valences of said radical being on separate carbon atoms in ortho-position of a same ring, and Ar" is a tetravalent aromatic radical formed of several fused or interlinked rings, at least two rings being further linked through a –CHOH– group, the four valences of said radical being on separate carbon atoms placed two by two in ortho position of a same ring, said co-reactant being used in a proportion corresponding to 10–50% of –CHOH– groups with respect to the total number of ortho-dinitrole groups.

10. The used of a composition, according to claim 9, characterized in that said co-reactant deriving from benzhydrol is selected from 3,4-dicyanobenzhydrol, 3'-phenoxy-3,4-dicyanobenzhydrol, 4'-phenoxy-3,4-dicyanobenzhydrol, 3-(3,4-dicyanophenoxy)-benzhydrol and 4-(3,4-dicyanophenoxy)-benzhydrol comprising an ortho-dinitrile functional group, 3,3',4,4'-tetracyanobenzhydrol, 3,3'-bis(3,4-dicyanophenoxy)benzhydrol, 4,4'-bis(3,4-dicyanophenoxy)benzhydrol, paraphenylenedioxy 3,3'-bis(3,4-dicyanobenzhydrol), paraphenylenedioxy 4,4'-bis(3,4-dicyanobenzhydrol), metaphenylenedioxy 3,3'-bis(3,4-dicyanobenzhydrol), metaphenylenedioxy 4,4'-bis 3,4-(diacyanobenzhydrol) and 2,6-bis(4-(4-(3,4-dicyanophenoxy)phenylhydroxymethylene)phenoxy)pyridine comprising 2 ortho-dinitrile functional groups.

11. A polyaryloxypyridine co-phthalocyanine lattice obtained according to one of claims 9 and 10.

**Patentansprüche**

1. Zusammensetzung von Polyaryloxypyridin-Oligomeren mit endständigen Phthalonitrilen, dadurch gekennzeichnet, daß sie erhalten wurde durch Bildung einer Zusammensetzung von Polyaryloxypyridin-Oligomeren mit endständigen Alkaliphenolaten aus mindestens einem Alkalidiphenolat und mindestens einem Dihalogenpyridin und anschließende Umsetzung von 4-Nitrophthalonitril mit dieser Zusammensetzung von Polyaryloxypyridin-Oligomeren mit endständigen Alkaliphenolaten.

2. Zusammensetzung nach Anspruch 1, dadurch gekennzeichnet, daß die Mengenanteile der Reagenzien einem mittleren Polykondensationsgrad von 1 bis 50 entsprechen.

3. Zusammensetzung nach einem der Ansprüche 1 und 2, dadurch gekennzeichnet, daß sie dargestellt wird durch die allgemeine Formel

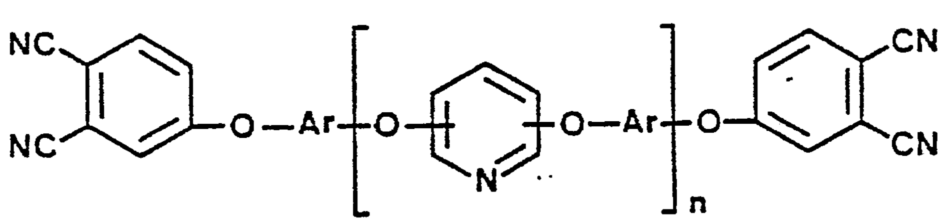

in der Ar einen divalenten aromatischen, carbocyclischen oder heterocyclischen Rest darstellt, der besteht aus einem oder mehreren kondensierten oder durch eine einfache Bindung oder durch ein divalentes Atom oder eine divalente Gruppe miteinander verbundenen Ringen, wobei die beiden Valenzen des aromatischen Ringes Ar an zwei unterschiedlichen Kohlenstoffatomen angeordnet sind, und n den mittleren Polykondensationsgrad darstellt.

4. Zusammensetzung nach einem der Ansprüche 1 bis 3, dadurch gekennzeichnet, daß das Alkalidiphenolat abgeleitet ist von einem Diphenol, das ausgewählt wird aus der Gruppe 1,2-Dihydroxybenzol, 1,3-Dihydroxybenzol, 1,4-Dihydroxybenzol, der Dihydroxytoluole, der Dihydroxyxylole, der Dihydroxynaphthaline, 2,2'-Dihydroxybiphenyl, 3,3'-Dihydroxybiphenyl, 4,4'-Dihydroxybiphenyl, bis-(3-Hydroxyphenyl)methan, bis-(4-Hydroxy-phenyl)methan, bis-(3-Hydroxy-phenyl)äther, bis-(4-Hydroxy-phenyl)-äther, bis-(3-Hydroxy-phenyl)sulfid, bis-(4-Hydroxy-phenyl)sulfid, bis-(3-Hydroxy-phenyl)sulfon, bis-(4-Hydroxy-phenyl)sulfon, bis-(3-Hydroxy-phenyl)sulfoxid, bis-(4-Hydroxy-phenyl)sulfoxid, 3,3'-Dihydroxy-benzophenon, 4,4'-Dihydroxy-benzophenon, 2,2-bis-(4-Hydroxy-phenyl)propan, 2,2-bis-(4-Hydroxyphenyl)-1,1,1,3,3,3-hexafluoropropan, bis-(3-Hydroxy-phenyl)dimethylsilan, bis-(4-Hydroxyphenyl)dimethylsilan, 1,3-bis-(3-Hydroxy-phenyl)-1,1,3,3-tetramethyl-disiloxan und 1,3-bis-(4-Hydroxyphenyl)-1,1,3,3-tetramethyl-disiloxan, und daß das Dihalogenpyridin ausgewählt wird aus der Gruppe 2,6-Difluoropyridin, 2,6-Dichloropyridin, 2,6-Dibromopyridin, 2,6-Dijodopyridin, 2,4-Difluoropyridin, 2,4-Dichloropyridin, 2,4-Dibromopyridin und 2,4-Dijodopyridin.

5. Zusammensetzung nach einem der Ansprüche 1 bis 4, dadurch gekennzeichnet, daß das Alkalidiphenolat abgeleitet ist von 2,2-bis-(4-Hydroxy-phenyl)propan und daß es sich bei dem Dihalogenpyridin um 2,6-Dichloropyridin handelt.

6. Verfahren zur Herstellung einer Zusammensetzung nach einem der Ansprüche 1 bis 5, dadurch gekennzeichnet, daß es umfaßt eine Stufe (a), in der man ein Alkalidiphenolat herstellt, indem man ein Diphenol mit einem Alkali-Reagens, ausgewählt aus der Gruppe der Alkalimetalle, ihrer Hydroxide, ihrer Carbonate und ihrer Alkoholate, reagieren läßt;
eine Stufe (b), in der man das in der Stufe (a) erhaltene Diphenolat mit einem Dihalogenpyridin in Molverhältnissen von 1,02/1 bis 2/1 so reagieren läßt, daß eine Zusammensetzung von Polyaryloxypyridin-Oligomeren mit endständigen Alkaliphenolaten mit einem mittleren Polykondensationsgrad von 1 bis 50 gebildet wird; und
eine Stufe (c), in der man das in der Stufe (b) erhaltene Produkt mit 4-Nitro-phthalonitril mit 1 bis 1,5, Nitrogruppen pro Phenolat-Gruppe reagieren läßt.

7. Verfahren zur Herstellung einer Zusammensetzung nach einem der Ansprüche 1 bis 5, dadurch gekennzeichnet, daß es umfaßt
eine Stufe (a), in der man ein Alkalidiphenolat herstellt, indem man ein Diphenol mit einem Alkalireagens, ausgewählt aus den Alkalimetallen, ihren Hydroxiden, ihren Carbonaten und ihren Alkoholaten, reagieren läßt;
eine Stufe (b), in der man das in der Stufe (a) erhaltene Diphenolat mit einem Dihalogenpyridin in Molverhältnissen von Dihalogenpyridin zu Diphenolat von 1,02/1 bis 2/1 reagieren läßt unter Bildung einer Zusammensetzung von Polyaryloxypyridin-Oligomeren mit endständigen Halogenatomen und einem mittleren Polykondensationsgrad von 1 bis 50, die man isoliert;
eine Stufe (b'), in der man die in der Stufe (b) erhaltene Zusammensetzung mit dem Diphenolat reagieren läßt mit mindestens einem Mol-Äquivalent Diphenolat pro endständigem Halogenatom unter Bildung einer Zusammensetzung von Polyaryloxypyridin-Oligomeren mit endständigen Phenolaten mit einem Polykondensationsgrad von 2 bis 50, die man isoliert; und
eine Stufe (c), in der man das in der Stufe (b') erhaltene Produkt mit 4-Nitro-phthalonitril mit 1 bis 1,5 Nitrogruppen pro Phenolatgruppe reagieren läßt.

8. Verfahren nach einem der Ansprüche 6 und 7, dadurch gekennzeichnet, daß die Umsetzung in der Stufe (c) in Lösung in einem aprotischen polaren Lösungsmittel bei einer Temperatur in der Größenordnung von 50 bis 100°C durchgeführt wird.

9. Verwendung einer Zusammensetzung von Polyaryloxypyridin-Oligomeren mit endständigen Phthalonitrilen nach einem der Ansprüche 1 bis 5 zur Herstellung von Netzen von Polyaryloxypyridin-co-polyphthalocyaninen, dadurch gekennzeichnet, daß man die Zusammensetzung Polymerisationsbedingungen unterwirft in Gegenwart mindestens eines von Benzhydrol abgeleiteten Coreagens der Formel

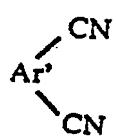

oder

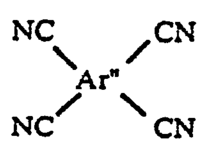

worin bedeuten:

Ar' einen aus mehreren kondensierten oder miteinander verbundenen Ringen bestehenden divalenten aromatischen Rest, wobei mindestens zwei Ringe außerdem durch eine Gruppe –CHOH– miteinander verbunden sind und die beiden Valenzen des Restes sich an verschiedenen Kohlenstoffatomen befinden, die in o-Position des gleichen Ringes angeordnet sind; und

Ar'' einen aus mehreren kondensierten oder miteinander verbundenen Ringen bestehenden tetravalenten aromatischen Rest, wobei mindestens zwei Ringe außerdem durch eine Gruppierung –CHOH– miteinander verbunden sind und die vier Valenzen des Restes sich an unterschiedlichen Kohlenstoffatomen befinden, die jeweils zu zweien in o-Position des gleichen Ringes angeordnet sind, wobei das Coreagens in einem Mengenanteil entsprechend 10 bis 50% der –CHOH–Funktionen, bezogen auf die Gesamtanzahl der o-Dinitril-Gruppen, eingesetzt wird.

10. Verwendung nach Anspruch 9, dadurch gekennzeichnet, daß das von Benzhydrol abgeleitete Coreagens ausgewählt wird aus der Gruppe 3,4-Dicyano-benzhydrol, 3'-Phenoxy-3,4-dicyano-benzhydrol, 4'-Phenoxy-3,4-dicyano-benzhydrol, 3-(3,4-Dicyano-phenoxy)-benzhydrol und 4-(3,4-Dicyano-phenoxy)benzhydrol, das eine funktionelle o-Dinitril-Gruppierung trägt, 3,3',4,4'-Tetracyano-benzhydrol, 3,3'-bis-(3,4-Dicyano-phenoxy)-benzhydrol, 4,4'-bis-(3,4-Dicyano-phenoxy)-benzhydrol, p-Phenylendioxy-3,3'-bis-(3,4-dicyano-benzhydrol), p-Phenylendioxy-4,4'-bis-(3,4-dicyano-benzhydrol), m-Phenylendioxy-3,3'-bis-(3,4-dicyano-benzhydrol), m-Phenylendioxy-4,4'-bis-(3,4-dicyano-benzhydrol) und 2,6-bis-(4-(4-(3,4-Dicyano-phenoxy)-phenylhydroxymethylen)-phenoxy)pyridin, das zwei funktionelle o-Dinitril-Gruppen trägt.

11. Netz aus Polyaryloxypyridin-co-polyphthalocyanin, wie es gemäß einem der Ansprüche 9 und 10 erhalten wird.